# EUROPÄISCHE PATENTSCHRIFT

(11) **EP 1 460 466 B1**
(45) Veröffentlichungstag und Bekanntmachung des Hinweises auf die Patenterteilung: **18.10.2006**
(21) Anmeldenummer: 04003066.0
(22) Anmeldetag: 11.02.2004
(51) Int. Cl.: G02B 21/22

(54) **Mikroskop, insbesondere Stereomikroskop**
Microscope, in particular stereomicroscope
Microsocope, notamment microscope stéréoscopique

(30) Priorität: 20.03.2003 DE 10312471
(43) Veröffentlichungstag der Anmeldung: 22.09.2004
(73) Patentinhaber: Leica Microsystems (Schweiz) AG, 9435 Heerbrugg (CH)
(72) Erfinder: Sander, Ulrich Dr., 9445 Rebstein (CH)
(74) Vertreter: Hössle Kudlek & Partner

(56) Entgegenhaltungen:
- EP-A- 0 791 339
- US-A1- 2001 010 592

## Beschreibung

Die vorliegende Erfindung betrifft ein Mikroskop, insbesondere ein Stereomikroskop, nach dem Oberbegriff des Patentanspruchs 1.

In der Ophthalmologie eingesetzte Operationsmikroskope bieten die Möglichkeit, daß sowohl der Hauptoperateur als auch ein Assistent das gleiche Operationsfeld einsehen können.

Ein derartiges ophthalmologisches Operationsmikroskop ist beispielsweise aus der DE 43 31 635 C2 bekannt. Das dort beschriebene Mikroskop weist je einen Binokulartubus für einen Haupt- und einen Mitbeobachter sowie einen Strahlteiler, der das Objektlicht auf den Haupt- und Mitbeobachter aufteilt, auf. Als nachteilig bei diesem Mikroskop wird angesehen, daß es relativ hoch baut, da die vollständige Vergrößerungsoptik für den Hauptbeobachter im wesentlichen vertikal angeordnet ist.

Auch in der Neurochirurgie machen es neue Operationstechniken erforderlich, daß Hauptoperateur und Assistent die gleiche Sicht auf einen zu operierenden Bereich haben.

Eine wesentliche Anforderung an heutige Operationsmikroskope besteht darin, daß ihre Bauhöhe aus ergonomischen Gründen so gering wie möglich gehalten wird. Ferner wird gefordert, daß der Mitbeobachter- bzw. Assistenteneinblick schnell und ohne Umbauarbeiten von der rechten zur linken Seite des Mikroskops (oder umgekehrt) verschwenkt werden kann, und daß durch Zubehör, welches nur für bestimmte Operationstechniken benötigt wird, weder die Bildqualität noch die Bauhöhe negativ beeinflußt wird. Ferner sollen bei ophthalmologischen Mikroskopen sowohl der Hauptbeobachter als auch der Assistent die Möglichkeit haben, den sogenannten Red-Reflex in gleicher Güte zu beobachten. Weiterhin soll der freie Arbeitsabstand, d.h. der Bereich zwischen Objekt und Objektiv, nicht durch zusätzliche bzw. optionale Bauelemente verringert werden. Bei Mikroskopen, welche in der Neurochirurgie eingesetzt werden ist es besonders vorteilhaft, wenn ein Assistentenmikroskop in allen Raumrichtungen relativ zur Blickrichtung des Hauptoperateurs positioniert werden kann.

Bei herkömmlichen Mikroskopen werden diese Anforderungen nur teilweise erfüllt.

Bei dem Mikroskop M840/M841 der Anmelderin gemäß dem Prospekt "Leica M841 EBS", Drucklegung November 2001, ist beispielsweise gewährleistet, daß Hauptoperateur und Assistent das gleiche Blickfeld haben. Dies wird dadurch erreicht, daß die assistentische Beobachtungseinrichtung oberhalb des Vergrößerungssystems angeordnet ist, und als Vergrößerungssystem ein Zoom-System verwendet wird, das aus vier identischen monoskopischen Vergrößerungssystemen aufgebaut ist. Dabei bilden jeweils zwei von den vier zueinander parallel liegenden Systemen das stereoskopische Vergrößerungssystem für den Hauptbeobachter. Auf der Verbindungsachse dieser Systeme senkrecht liegende weitere Systeme bzw. Kanäle stellen hierbei das stereoskopische Vergrößerungssystem für den Assistenten dar.

Aus der US 2001/0010592 A1 ist ein in der Neurochirurgie einsetzbares Mikroskop bekannt, welches ein Objektivsystem, ein Zoomsystem und ein Okularsystem aufweist. Hierbei ist das Objektivsystem im wesentlichen vertikal angeordnet, während das aus zwei Einzelsystemen bzw. optischen Kanälen bestehende Zoom-System horizontal angeordnet ist. Hierbei liegt die Achse des Zoom-Systems senkrecht zu der Achse des Hauptobjektivs. Das Zoom-System besteht, wie erwähnt, wiederum aus zwei identischen Vergrößerungskanälen, deren Achsen parallel zueinander verlaufen, womit die stereoskopische Betrachtung eines Objektes durch den Hauptbeobachter gewährleistet ist. Als nachteilig bei dem dort beschriebenen Mikroskop wird empfunden, daß durch die Auskopplung des Assistenten-Strahlengangs unterhalb des Hauptobjektivs der freie Arbeitsabstand erheblich reduziert wird. Ferner ist ein relativ hoher Aufwand bezüglich der verwendeten optischen Komponenten notwendig, da Hauptoperateur und Assistent jeweils separate Hauptobjektive benötigen.

Die vorliegende Erfindung hat zum Ziel, ein Mikroskop, insbesondere Stereomikroskop, welches eine Simultanbeobachtung durch einen ersten und einen zweiten Beobachter gestattet, mit möglichst geringer Bauhöhe und möglichst großem freien Arbeitsabstand bei gleichzeitiger einfacher Handhabbarkeit zur Verfügung zu stellen.

Dieses Ziel wird erreicht mit einem Mikroskop, insbesondere Stereomikroskop, mit den Merkmalen des Patentanspruches 1.

Durch die dem gemeinsamen Hauptobjektiv für den ersten und zweiten Beobachter nachgeordnete Strahlenteilereinrichtung, d.h. der Anordnung der Strahlenteilereinrichtung innerhalb des Mikroskopkörpers zwischen Hauptobjektiv und Vergrößerungssystem, erfährt der freie Arbeitsabstand zwischen Hauptobjektiv und zu beobachtendem Objekt keine Beeinträchtigung. Durch die erfindungsgemäße Umlenkung des das Hauptobjektiv durchsetzenden Beobachtungsstrahlenbüschels bzw. - ganges in Ebenen, welche bezüglich der optischen Achse des Hauptobjektivs unter einem Winkel, insbesondere senkrecht, verlaufen, kann ferner die Bauhöhe des erfindungsgemäßen Mikroskops gegenüber herkömmlichen Lösungen verkleinert werden.

Vorteilhafte Ausgestaltungen des erfindungsgemäßen Mikroskops sind Gegenstand der Unteransprüche.

Gemäß einer ersten bevorzugten Ausgestaltung des erfindungsgemäßen Mikroskops ist die Strahlteilereinrichtung als geometrischer Strahlenteiler ausgebildet. Bei Verwendung eines derartigen Strahlenteilers ist der Lichtverlust aufgrund von Absorption besonders gering.

Zweckmäßigerweise weist die beispielsweise als Platte ausgebildete Strahlenteilereinrichtung wenigstens einen reflektierenden Bereich und wenigstens einen transmittierenden Bereich auf. Eine derartige Strahlenteilereinrichtung ist in einfacher und preiswerter Weise herstellbar und gewährleistet durch entsprechende Anordnung in einem Winkel zu dem sie beaufschlagenden Strahlengang die gewünschte Teilung dieses Strahlengangs in Teilstrahlengänge. Mittels dieser Maßnahme ist ferner die Festlegung von Paaren stereoskopischer Strahlenbüschel in einfacher Weise definierbar.

Gemäß einer weiteren bevorzugten Ausführungsform des erfindungsgemäßen Mikroskops ist die Strahlenteilereinrichtung als physikalischer Strahlenteiler ausgebildet. Bei einer derartigen Strahlenteilung bleibt der Querschnitt eines die Strahlenteilereinrichtung durchsetzenden Lichtbündels bzw. Strahlenganges unverändert, d.h. die Aufteilung des Strahlenganges in Teilstrahlengänge erfolgt gleichmäßig über den gesamten Querschnitt der Strahlenteilereinrichtung.

Es ist bevorzugt, daß die erste, zweite und dritte Ebene des Mikroskops im wesentlichen horizontal ausgerichtet sind. Insbesondere in Kombination mit einer vertikal verlaufenden optischen Achse des Hauptobjektivs ist so die Bauhöhe des Mikroskops minimierbar.

Gemäß einer bevorzugten Ausführungsform der Erfindung weist das Vergrößerungssystem ein in der ersten oder zweiten Ebene des Mikroskops vorgesehenes erstes Zoom-System für den ersten Beobachter, und ein in der dritten Ebene vorgesehenes zweites Zoom-System für den zweiten Beobachter auf. Durch diese getrennte Anordnung der Zoom-Systeme ist es möglich, Hauptoperateur und Assistenten mit Zoom-Systemen verschiedener Vergrößerung auszustatten. Ferner können, beispielsweise bei gleichen oder gleichartigen Zoom-Systemen für Hauptoperateur und Assistent, unterschiedliche Vergrößerungen eingestellt werden. Durch diese Anordnung des Zoom-Systems für den zweiten Beobachter bzw. Assistenten ist ferner eine örtlich variable Einstellung des Assistentenmikroskops bzw. Assistenteneinblicks bezüglich des Hauptoperateurs zur Verfügung gestellt.

Zweckmäßigerweise weisen das erste und das zweite Zoom-System jeweils wenigstens zwei Vergrößerungs- bzw. Beobachtungskanäle auf. Durch diese Maßnahme kann zunächst eine stereoskopische Beobachtung sowohl für den Hauptoperateur als auch den Assistenten bereitgestellt werden. Es ist hier ebenfalls denkbar, die Zoom-Systeme mit wenigstens einem weiteren Vergrößerungs- bzw. Beobachtungskanal auszustatten, an dem beispielsweise eine Videokamera zur Dokumentation anschließbar ist. Zweckmäßigerweise sind bei Verwendung eines geometrischen Strahlenteilers die transmittierenden und reflektierenden Bereiche des Strahlenteilers auf die Vergrößerungs- bzw. Beobachtungskanäle der Zoom-Systeme abgestimmt.

Es ist bevorzugt, die Umlenkeinrichtung zur Umlenkung des Teilstrahlengangs in die dritte Ebene um die optische Achse des Hauptobjektivs drehbar auszubilden. Mit dieser Maßnahme ist die Einblickrichtung für den zweiten Beobachter in einfacher Weise bezüglich des ersten Beobachters drehbar. Insbesondere bei Verwendung eines physikalischen Strahlenteilers zur Bereitstellung der beiden Teilstrahlengänge ist eine Drehbarkeit des Teilstrahlenganges für den zweiten Beobachter in der dritten Ebene im wesentlichen um 360° möglich, da am Ort der Umlenkeinrichtung zur Umlenkung des Teilstrahlenganges in die dritte Ebene noch keine stereoskopische Aufspaltung des Teilstrahlenganges stattgefunden hat. Es sei angemerkt, daß auch bei Verwendung eines geometrischen Strahlenteilers eine Drehbarkeit der Umlenkeinrichtung zur Umlenkung des Teilstrahlenganges in die dritte Ebene zweckmäßig ist, da auch bei bereits erfolgter stereoskopischer Aufspaltung eine Verschwenkung innerhalb bestimmter Grenzen bezüglich bevorzugter Positionen des Assistentenmikroskops noch einen zufriedenstellenden Assistenteneinblick gewährleistet. Als bevorzugte Positionen sind insbesondere die Positionen zu nennen, bei denen stereoskopische Strahlenbüschel des Assistenten- Teilstrahlengangs in gleicher Höhe, d.h. im wesentlichen horizontal, auf das Umlenkelement auftreffen, so dass ein entsprechender horizontaler Einblick durch den Assistenten (ohne die Notwendigkeit einer Schrägstellung des Kopfes) möglich ist. Diese bevorzugten Positionen sind gekennzeichnet durch gleiche zurückzulegende Wegstrecken für die stereoskopischen Teilstrahlenbüschel. In der Regel sind dies Positionen senkrecht zu der Einblickrichtung des Hauptoperateurs.

Es kann ferner zweckmäßig sein, einen Binokulartubus für den Hauptoperateur, beispielsweise in der zweiten Mikroskopebene, und/oder den Assistenten, beispielsweise in der dritten Mikroskopebene, um die jeweilige optische Achse in den jeweiligen Ebenen drehbar auszugestalten, so dass beispielsweise Schrägstellungen des Gesamtmikroskops und/oder des Assistentenmikroskops ausgeglichen werden können.

Gemäß einer weiteren bevorzugten Ausführungsform des erfindungsgemäßen Mikroskops kreuzen sich der erste Teilstrahlengang und der zweite Teilstrahlengang im Bereich des Schnittpunktes der optischen Achse des Hauptobjektivs mit der zweiten Ebene des Mikroskops. Hierbei verläuft der erste Teilstrahlengang in der zweiten Ebene, und der erste Teilstrahlengang entlang der optischen Achse des Hauptobjektivs. Bei dieser im wesentlichen senkrechten Kreuzung bzw. Durchdringung der beiden Teilstrahlengänge kommt es zu keiner gegenseitigen Beeinflussung, so daß insgesamt durch diese Maßnahme der Bauraum des Mikroskops optimiert werden kann. Es ist ebenfalls denkbar, die beiden Teilstrahlengänge ohne gegenseitige Kreuzung oder Durchdringung aneinander vorbeizuführen.

Zweckmäßigerweise weist das erfindungsgemäße Mikroskop wahlweise einsetzbare und/oder verschwenkbare Umlenkelemente auf, mittels derer der erste Teilstrahlengang von der zweiten in die erste Ebene umlenkbar bzw. um die jeweiligen optischen Achsen in der ersten oder zweiten Ebene verschwenkbar ist. Mittels dieser Maßnahme ist der Einsehbarkeitsbereich für den ersten Beobachter bzw. Hauptoperateur ebenfalls variierbar.

Mit einer weiteren bevorzugten Ausführungsform des erfindungsgemäßen Mikroskops ist zwischen dem Hauptobjektiv und der Strahlenteilereinrichtung eine Dateneinspiegelungseinrichtung vorgesehen. Durch eine derartige Dateneinspiegelung vor der Aufteilung des Strahlenganges in die Teilstrahlengänge können die eingespiegelten Daten mittels einer einzigen Dateneinspiegelung dem Hauptoperateur und dem Assistenten zur Verfügung gestellt werden.

Gemäß einer weiteren bevorzugten Ausführungsform des erfindungsgemäßen Mikroskops ist die Beleuchtungseinrichtung bezüglich der dem Hauptobjektiv nachgeordneten Strahlenteilereinrichtung beobachterseitig positioniert. Beispielsweise kann die Beleuchtungseinrichtung im Bereich der optischen Achse des Hauptobjektivs oder der optischen Achse in der ersten Mikroskopebene vorgesehen sein. Beispielsweise könnte in einem derartigen Fall die Strahlenteilereinrichtung mit weiteren reflektierenden oder transmittierenden Bereichen ausgebildet sein, welche die Beleuchtung des zu beobachtenden Objektes mit Licht aus der Beleuchtungseinrichtung gewährleisten.

Es erweist sich ferner als zweckmäßig, eine elektrische und/oder mechanische Kopplung der Zoom-Systeme des Hauptoperateurs und des Assistenten zur Verfügung zu stellen. Mit dieser Maßnahme ist insbesondere die Einstellung gleicher Vergrößerungen für den Hauptoperateur und den Assistenten erzielbar, wobei es denkbar ist, wahlweise eine entkopplung der Zoom-Systeme vorzunehmen.

Die Erfindung wird nun anhand der beigefügten Zeichnung weiter erläutert. In dieser zeigt
- Figur 1: eine erste bevorzugte Ausführungsform des erfindungsgemaßen Mikroskops in schematischer seitlicher Schnittansicht,
- Figur 2: eine im Rahmen des erfindungsgemäßen Mikroskops bevorzugt einsetzbare geometrische Strahlenteilereinrichtung zur Aufspaltung des das Hauptobjektiv durchsetzenden Beobachtungsstrahlenganges in Teilstrahlengänge für den ersten und zweiten Beobachter, und
- Figur 3: eine der Figur 1 entsprechende Ansicht einer zweiten bevorzugten Ausführungsform des erfindungsgemäßen Mikroskops.

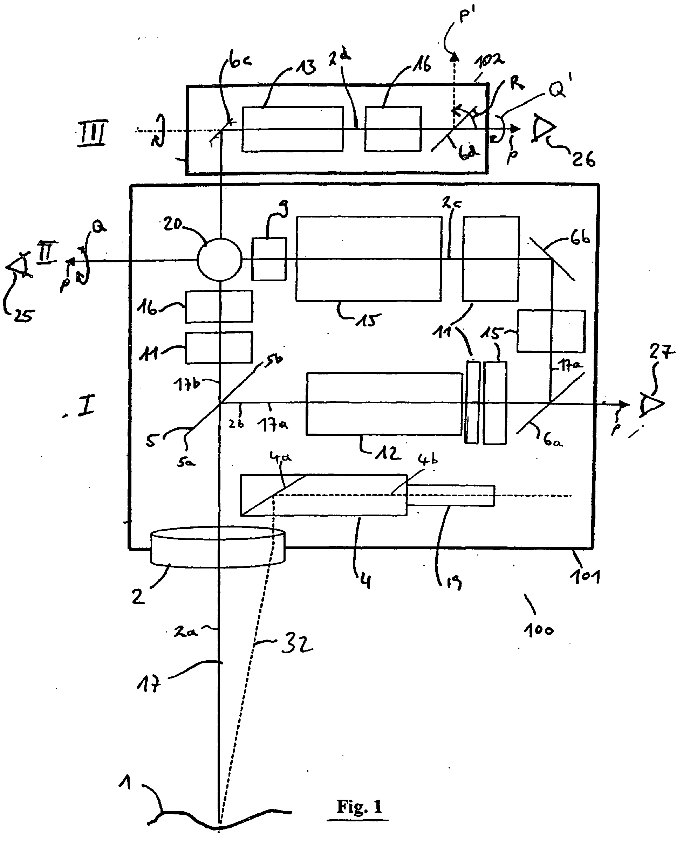

In Figur 1 ist eine bevorzugte Ausführungsform eines als Stereomikroskop ausgebildeten erfindungsgemäßen Mikroskops insgesamt mit 100 bezeichnet. Mittels des dargestellten Stereomikroskops soll ein Objekt 1 beobachtet werden. Bei dem dargestellten Stereomikroskop handelt es sich insbesondere um ein ophthalmologisches Mikroskop oder ein Mikroskop für die Neurochirurgie.

Das dargestellte Stereomikroskop 100 weist ein Gehäuse 101, in welches die optischen Systeme für einen ersten Beobachter bzw. Hauptoperateur eingebracht sind, und ein Assistentenmikroskop 102 auf.

Mit 4 ist eine Beleuchtungseinrichtung bezeichnet, welche mittels eines Faserkabels 19 bereitgestelltes Licht über ein Umlenkelement 4a auf das zu beobachtende Objekt 1 richtet. Die Hauptachse der Beleuchtungseinrichtung 4 ist mit 4b bezeichnet, ihre Beleuchtungsachse mit 32.

Im unteren Bereich des Mikroskopgehäuses 101 ist ein Hauptobjektiv 2 vorgesehen. Das Hauptobjektiv 2 definiert eine optische Achse 2a.

Oberhalb des Hauptobjektivs 2 ist eine Strahlenteilereinrichtung 5 vorgesehen, welche einen vom Objekt 1 entlang der optischen Achse 2a ausgehenden Beobachtungsstrahlengang 17 in einen ersten Teilstrahlengang 17a und einen zweiten Teilstrahlengang 17b aufspaltet. Man erkennt, daß der Beobachtungsstrahlengang 17 in der dargstellten Orientierung des Mikroskops im wesentlichen vertikal, und der Teilstrahlengang 17a hierzu senkrecht, d.h. im wesentlichen horizontal verläuft. Teilstrahlengang 17b erfährt bezüglich des Beobachtungsstrahlengangs 17 keine Ablenkung, verläuft also ebenfalls im wesentlichen vertikal. Es sei angemerkt, dass das Mikroskop 100 in alle Raumrichtungen drehbar ausgebildet sein kann, wodurch sich entsprechend geneigte Orientierungen der optischen Achse 2a des Hauptobjektivs ergeben.

Teilstrahlengang 17a definiert in einer ersten Mikroskopebene I eine optische Achse 2b, entlang derer weitere optische Komponenten 11, 12, 15 angeordnet sind.

Mit 12 ist hierbei ein Vergrößerungssystem für den Hauptoperateur bezeichnet, welches bevorzugt als Zoom-System ausgebildet ist. Zusätzliche Bauelemente, welche ebenfalls in der ersten Mikroskopebene I vorgesehen sein können, sind schematisch dargestellt und mit 15 bezeichnet. Ebenfalls vorgesehen sind Zwischenabbildungssysteme, insgesamt mit 11 bezeichnet.

Ein in der ersten Mikroskopebene I vorgesehenes erstes Umlenkelement ist mit 6a bezeichnet. Dieses dient dazu, den Teilstrahlengang 17a wiederum in die vertikale Richtung umzulenken. In einer zweiten Mikroskopebene II ist ein weiteres Umlenkelement 6b vorgesehen, auf welches der Teilstrahlengang 17a nach seiner Umlenkung bei 6a trifft, um wiederum in die horizontale Richtung abgelenkt zu werden. Eine durch den Teilstrahlengang 17a in der zweiten Ebene II definierte optische Achse ist mit 2c bezeichnet. Weitere optische Zusatzkomponenten bzw. Zwischenabbildungssysteme, welche entweder zwischen den Umlenkelementen 6a, 6b oder entlang der optischen Achse 2c angeordnet sein können, sind wiederum mit 15 bzw. 11 bezeichnet. Den optischen Zusatzkomponenten 15 in der zweiten Mikroskopebene II beispielsweise nachgeordnet ist eine optische Teilereinrichtung 9. Nach Durchgang durch die optischen Zusatzkomponenten 15 und den optischen Teiler 9 in der zweiten Mikroskopebene II trifft der Teilstrahlengang 17a auf einen (nicht dargestellten) Binokulartubus für den Hauptoperateur bzw. ersten Beobachter. Zur Verdeutlichung der Einsehrichtung des Hauptoperateurs ist ein Auge schematisch dargestellt und mit 25 bezeichnet. Ein (nicht dargestellter) Binokulartubus für den Hauptoperateur ist zweckmäßigerweise um die optische Achse 2c der zweiten Mikroskopebene II verdrehbar, wie durch den Drehpfeil Q veranschaulicht ist. Mit dieser Maßnahme sind Schrägstellungen des Mikroskops, welche in der Ophtalmologie oder Neurochirurgie oftmals nicht vermieden werden können, für den Hauptbeobachter ausgleichbar, d. h. dem Hauptoperateur wird ein im wesentlichen horizontaler Einblick zur Verfügung gestellt.

Der von der Strahlenteilereinrichtung 5 transmittierte bzw. nicht abgelenkte Teilstrahlengang 17b durchläuft, vertikal nach oben verlaufend, zunächst ein optisches Zwischenabbildungssystem, wiederum mit 11 bezeichnet, und weitere optische Zusatzkomponenten 16. In einem insgesamt mit 20 bezeichneten und der Anschaulichkeit halber mit einem Kreis symbolisierten Durchdringungsbereich kreuzt der Teilstrahlengang 17b (bzw. die optische Achse 2a) die zweite Mikroskopebene II. Es ist hierbei bevorzugt, daß der Teilstrahlengang 17b auch die optische Achse 2c, welche in der zweiten Mikroskopebene II verläuft, kreuzt. Da hierbei keine gegenseitige Beeinflussung der horizontal bzw. vertikal verlaufenden Teilstrahlengänge 17a, 17b erfolgt, trifft Teilstrahlengang 17b anschließend auf ein weiteres (drittes) Umlenkelement 6c, welches in dem Assistentenmikroskop 102 angeordnet ist. Hierdurch erfährt der Teilstrahlengang 17b eine Umlenkung in eine parallel zu den Ebenen I, II verlaufende dritte Mikroskopebene III.

Die Umlenkung des Teilstrahlengangs 17b in die dritte Mikroskopebene III definiert eine im wesentlichen horizontal verlaufende optische Achse 2d.

Entlang der optischen Achse 2d ist ein insbesondere als Zoom-System ausgebildetes Assistenten-Vergrößerungssystem 13 zusammen mit zusätzlichen Assistenten-Bauelementen, auch hier mit 16 bezeichnet, vorgesehen. Der Assistenteneinblick (mittels eines nicht im einzelnen dargestellten Binokulartubus) erfolgt hierbei in der dritten Mikroskopebene III, wie mittels des schematisch dargestellten Auges (Bezugszeichen 26) veranschaulicht ist.

Zwischen den optischen Zusatzkomponenten 16 und dem (nicht dargestellten) Binokulartubus für den Assistenten kann (optional) ein weiteres (viertes) Umlenkelement 6d vorgesehen sein, welches eine Umlenkung des Teilstrahlengangs 17b aus der dritten Mikroskopebene III heraus bewirken kann. Hierdurch kann entweder ein Assistenteneinblick in einer weiteren Mikroskopebene realisiert werden, oder, beispielsweise bei halbdurchlässiger Ausführung des Umlenkelements 6d, ein gleichzeitiger Assistenteneinblick bei 26 in der dritten Mikroskopebene III und eine Ausspiegelung, beispielsweise zu Dokumentationszwecken. Umlenkelement 6d kann verschwenkbar ausgebildet sein, wie durch den Drehpfeil R veranschaulicht ist, welcher den Winkelbereich darstellt, über den die entlang der optischen Achse 2d der dritten Mikroskopebene III verlaufenden Strahlenbüschel drehbar bzw. ablenkbar sind. Mit P ist hier, wie bereits erwähnt, der Assistenteneinblick in der dritten Mikroskopebene III bezeichnet, wobei dieser Einblick durch Verdrehung des Umlenkelements 6d um eine in die Zeichenebene senkrecht hinein verlaufende optische Achse in eine mit einem Pfeil P' gekennzeichnete Einblickrichtung drehbar ist. Zweckmäßigerweise ist ferner ein (nicht dargestellter) Binokulartubus für den Assistenten, welcher sich beispielsweise entlang der optischen Achse 2d in Richtung des Pfeiles P anschließen kann, um die optische Achse 2d verdrehbar, wie mittels des Drehpfeiles Q' veranschaulicht ist. Wie bereits erwähnt, sind durch diese Maßnahme Schrägstellungen des Assistentenmikroskops für den Assistenten bzw. Mitbeobachter ausgleichbar.

Die Aufspaltung des das Hauptobjektiv 2 durchsetzenden Hauptbeobachtungsstrahlenganges 17 in jeweils zwei Paare stereoskopischer Strahlengänge kann bevorzugt auf zwei Arten realisiert werden.

Zunächst ist es möglich, die Strahlenteilereinrichtung 5 als physikalischen Strahlenteiler, z.B. halbdurchlässigen Spiegel, auszubilden, so daß jeweils ein Strahlenbüschel aufweisende Teilstrahlengänge auf das Vergrößerungssystem 12 für den Hauptoperateur bzw. das Vergrößerungssystem 13 für den Assistenten treffen. In diesen Vergrößerungssystemen 12, 13 können dann jeweils zwei Beobachtungskanäle vorgesehen sein, mittels der die stereoskopische Aufspaltung der jeweiligen Teilstrahlengänge realisiert wird. In der Perspektive der Figur 1 sind hierbei die zwei Beobachtungskanäle des Vergrößerungssystems 12 hintereinander auf gleicher Höhe, d.h. parallel zu der optischen Achse 2b in der ersten Mikroskopebene I angeordnet. In der Perspektive der Figur 1 fallen daher die optischen Achsen beider Beobachtungskanäle des Vergrößerungssystems 12 mit der optischen Achse 2b zusammen. Eine entsprechende Anordnung der Vergrößerungskanäle ist in dem Assistenten-Vergrößerungssystem 13 realisierbar. Bei einer derartigen Ausbildung von Strahlenteilereinrichtung 5 und Vergrößerungssystemen 13 des Assistenten erweist es sich als besonders vorteilhaft, daß das Assistentenmikroskop 102 prinzipiell um 360° um die optische Achse 2a gedreht werden kann, ohne den Einblick für den Assistenten zu beeinflussen bzw. zu beeinträchtigen.

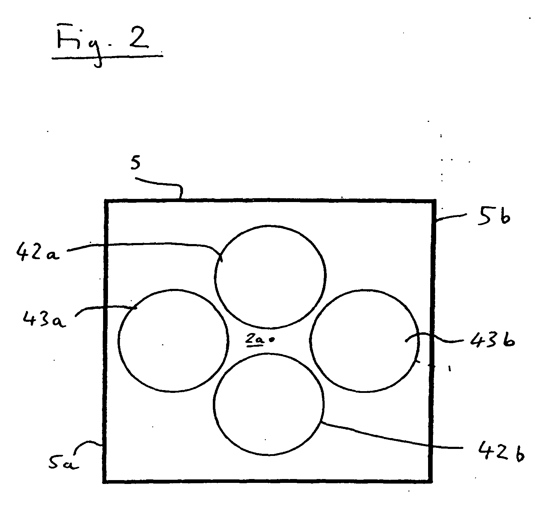

Durch eine spezielle Konstruktion der Strahlenteilereinrichtung 5 ist es jedoch möglich, die Aufspaltung des Beobachtungsstrahlengangs 17 in jeweilige Strahlengangpaare aufweisende Teilstrahlengänge 17a, 17b für den Hauptoperateur und den Assistenten bereits vor dem Eintritt der Teilstrahlengänge 17a, 17b in die Vergrößerungssysteme 12 bzw. 13 zu bewerkstelligen. Dies sei nun anhand der Figur 2 verdeutlicht, welche eine weitere bevorzugte Ausführungsform der Strahlenteilereinrichtung 5 darstellt. Die Darstellung der Strahlenteilereinrichtung gemäß Figur 2 stellt eine Projektion dieser Einrichtung in eine Ebene senkrecht zu der optischen Achse 2a des Hauptobjektivs 2 dar. Zur Verdeutlichung der Einbaulage in dem Mikroskop 100 sind die untere Kante 5a und die obere Kante 5b der Strahlenteilereinrichtung 5 sowohl in Figur 1 als auch in Figur 2 eingezeichnet. Die kreisförmigen Bereiche 42a, 42b sind vollreflektierend ausgebildet, so daß auf diesen Bereichen auftreffendes Licht des Strahlenganges 17 umgelenkt wird und den Teilstrahlengang 17a bildet, welcher somit zwei parallel zueinander verlaufende Strahlenbüschel aufweist. Die Bereiche 42a, 42b sind so ausgerichtet, daß an ihnen reflektierte Strahlenbüschel entsprechend angeordnete (nicht im einzelnen dargestellte) Beobachtungskanäle im Vergrößerungssystem 12 beaufschlagen.

Die Bereiche 43a, 43b der Strahlenteilereinrichtung 5 sind hingegen vollständig lichtdurchlässig bzw. transmittierend, so daß diese Bereiche durchlaufendes Licht des Strahlengangs 17 umgewandelt bzw. aufgespalten wird in zwei parallele Strahlenbüschel, welche den Teilstrahlengang 17b bilden.

Es sei darauf hingewiesen, dass die Ausbildung der Strahlenteilereinrichtung 5 mit vier kreisförmig ausgebildeten Bereichen 42a, 42b, 43a, 43b insbesondere aus Gründen der Anschaulichkeit erfolgt. Es ist auch eine beliebige Ausbildung der als Platte ausgebildeten Strahlenteilereinrichtung 5 mit reflektierenden oder transmittierenden Bereichen möglich, wobei zweckmäßigerweise darauf zu achten ist, dass die reflektierenden bzw. transmittierenden Bereiche derart dimensioniert sind, dass die Beobachtungskanäle der jeweiligen Vergrößerungssysteme 12 bzw. 13 vollständig mit Lichtbüscheln beaufschlagt sind.

Zweckmäßigerweise ist das Assistentenmikroskop bei Verwendung einer derartigen Strahlenteilereinrichtung 5 bezüglich der in Figur 1 dargestellten Ausrichtung um 90° aus der Zeichenebene heraus bzw. in diese hinein verschwenkt, so daß an dem Umlenkelement 6c keine Gangunterschiede für die jeweiligen parallelen Strahlenbüschel (welche in der Perspektive der Figur 1 rechts und links versetzt bezüglich der optischen Achse 2a verlaufen) entstehen. Als zweckmäßig erweist sich eine Verschwenkung des Assistentenmikroskops 102 um die optische Achse 2a um ± 20° bezüglich der erwähnten zweckmäßigen Ausrichtung.

Die dargestellten Bauelemente 15 können Dateneinspiegelungen, Shutter, Filter, transparente Displays, Pupillenverlagerer, Strahlumlenksysteme, Bildaufrichter, Bildinverter oder ähnliche Einrichtungen umfassen. Der optische Teiler 9 dient vorzugsweise zum Anschluß einer Dokumentationseinrichtung, beispielsweise einer Videokamera. Ein derartiger optischer Teiler kann sich auch an anderer Stelle der dargestellten Strahlengänge befinden, beispielsweise an den Stellen der Bauteile 11, 15 oder 16.

Wie bereits erwähnt, sind Binokulartuben für den Hauptoperateur bzw. den Assistenten in Figur 1 nicht eingezeichnet. Es sei darauf hingewiesen, daß in Richtung der eingezeichneten Pfeile die Teilstrahlengänge 17a, 17b in nicht gezeichnete Binokulartuben mit Okularen gelenkt werden, wodurch dem Hauptbeobachter 25 bzw. dem Assistenten ein binokularer stereoskopischer Einblick ermöglicht wird.

Die zusätzlichen optischen Komponenten 16 im Assistentenmikroskop 102 können ebenfalls Bildaufrichter, Zwischenabbildungssysteme, Umlenkelemente, Dateneinspiegelungseinrichtungen, Filter, Pupillenverlagerer, Bildaufrichter, Bildinverter usw. umfassen. Falls eine Assistentenbeobachtung nicht gewünscht bzw. notwendig ist, kann das Assistentenmikroskop 102 entfernt werden. Beispielsweise durch Ersatz der dargestellten Strahlenteilereinrichtung 5 durch ein vollständig reflektierendes Umlenkelement, bspw. einen Spiegel oder ein Prisma, kann so dem Hauptoperateur die gesamte Helligkeit bzw. Lichtstärke unter Beibehaltung sämtlicher anderer Vorteile der dargestellten Konstruktion zur Verfügung gestellt werden. Zweckmäßigerweise ist die Strahlenteilereinrichtung 5 durch Verschwenkung oder Verschiebung aus dem Strahlengang entfernbar, und ein derartiges vollständig reflektierendes Element entsprechend in den Strahlengang einbringbar.

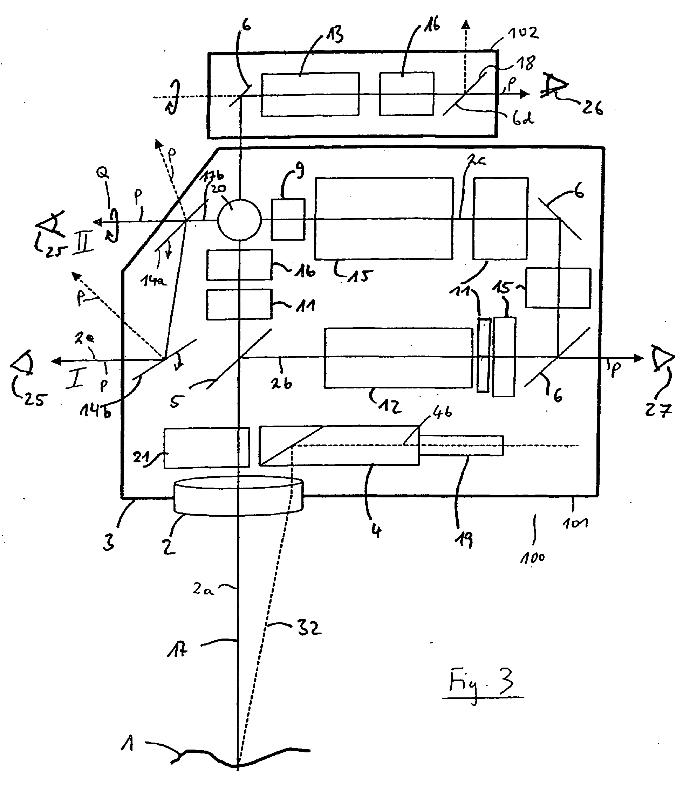

Eine weitere Ausführungsform des erfindungsgemäßen Mikroskops wird nun unter Bezugnahme auf Figur 3 beschrieben. Bereits in Figur 1 dargestellte Komponenten, welche bei der Ausführungsform gemäß Figur 3 ebenfalls vorgesehen sind, sind mit gleichen Bezugszeichen bezeichnet. Auf eine gesonderte Darstellung dieser Komponenten und Ihrer Funktionsweise kann daher verzichtet werden.

Die Ausführungsform des erfindungsgemäßen Mikroskops gemäß Figur 3 unterscheidet sich im wesentlichen von der Ausführungsform gemäß Figur 1 durch die Führung des Teilstrahlenganges 17a für den Hauptoperateur hinter dem Durchdringungsbereich 20. Gemäß der Ausführungsform der Figur 3 sind hier zwei weitere Umlenkelemente 14a, 14b vorgesehen, mittels derer eine Umlenkung des Teilstrahlengangs 17a von der zweiten Mikroskopebene II zurück in die erste Mikroskopebene I durchführbar ist. Bei wahlweiser Einschwenkung oder Ausschwenkung des Umlenkelements 14a in bzw. aus dem Strahlengang 17a ist somit ein Einblick durch den Hauptoperateur in der zweiten Mikroskopebene II (entlang der optischen Achse 2c) bzw. in der ersten Mikroskopebene I, bspw. entlang der Verlängerung 2e der optischen Achse 2b möglich. Es ist ebenfalls denkbar, diese Umlenkelemente 14a, 14b um Achsen senkrecht zur Zeichenebene bzw. zu den optischen Achsen 2c bzw. 2e verschwenkbar auszubilden. Hierdurch ist auch die Möglichkeit einer Schrägeinsicht durch den Hauptoperateur zur Verfugung gestellt. Die Umlenkelemente 14a, 14b können auch halbdurchlässig ausgebildet sein, wodurch sich wiederum verschiedene Möglichkeiten der Einblick bzw. Ausspiegelung ergeben. Zweckmäßige Drehbereiche der Umlenkelemente 14a, 14b sind wiederum anhand von Drehpfeilen R veranschaulicht, welche die Drehbarkeit des Hauptoperateuer-Einblicks zwischen jeweiligen Positionen P und P' symbolisieren.

Falls eine Dateneinspiegelung sowohl für den Hauptoperateur als auch den Assistenten gewünscht wird, muß diese gemäß der Ausfuhrungsform der Figur 1 gesondert für Hauptoperateur bzw. Assistent vorgesehen sein. Gemäß der Ausführungsform der Figur 2 ist eine Dateneinspiegelung 21 vor- bzw. objektseitig der Strahlenteilereinrichtung 5 vorgesehen, (das heißt zwischen Hauptobjektiv 2 und Strahlenteilereinrichtung 5). Auf diese Weise können sowohl Hauptoperateur als auch Assistent eine gemeinsame Dateneinspiegelung benutzen.

Zur Optimierung der Beleuchtungseinkopplung kann die Symmetrieachse bzw. optische Achse 2a des Hauptobjektivs 2 bei Bedarf dezentriert zu dem Beobachtungsstrahlengang 17 ausgerichtet sein.

### Bezugszeichenliste:

- 1: - Objekt
- 2: - Hauptobjektiv
- 2a: - optische Achse des Hauptobjektivs
- 2b: - optische Achse in Mikroskopebene I
- 2c: - optische Achse in Mikroskopebene II
- 2d: - optische Achse in Mikroskopebene III
- 2e: - Verlängerung der optischen Achse 2b
- 4: - Beleuchtungseinrichtung
- 4a: - Umlenkelement
- 4b: - Hauptachse der Beleuchtungseinrichtung
- 5: - Strahlenteilereinrichtung
- 6a bis 6d: - Umlenkelemente
- 9: - optische Teilereinrichtung
- 11: - Zwischenabbildungssystem
- 12: - Vergrößerungssystem (für Hauptoperateur)
- 13: - Assistenten-Vergrößerungssystem
- 14a, 14b: - Umlenkelemente
- 15, 16: - optische Zusatzkomponenten
- 17: - Beobachtungsstrahlengang
- 17a, 17b: - Teilstrahlengänge
- 19: - Faserkabel
- 20: - Durchdringungsbereich
- 25, 26: - Augen bzw. Einblickrichtungen
- 32: - Beleuchtungsachse
- 42a, 42b: - reflektierende Bereiche der Strahlenteilereinrichtung 5
- 43a, 43b: - transmittierende Bereiche der Strahlenteilereinrichtung 5
- 100: - Stereomikroskop
- 101: - Gehäuse
- 102: - Assistentenmikroskop
- I, II, III: - Mikroskopebenen
- P, P': - Pfeile, Einblickrichtungen symbolisierend
- Q, Q': - Drehpfeile, Drehbarkeiten symbolisierend
- R: - Drehpfeile, Drehbereiche symbolisierend

## Patentansprüche

1. Mikroskop, insbesondere Stereomikroskop, zur Simultanbeobachtung durch einen ersten und einen zweiten Beobachter, mit einem Mikroskopgehäuse (101) mit einem eine optische Achse (2a, 17) definierenden gemeinsam Hauptobjektiv (2) für einen ersten und einen zweiten Beobachter, welches im unteren Bereich des Mikroskopgehäuses (101) angeordnet ist, einem dem Hauptobjektiv, im Mikroskopgehäuse nachgeordneten Vergrößerungssystem, und einer innerhalb des Mikroskopgehäuses (101) zwischen Hauptobjektiv (2) und Vergrößerungssystem angeordneten Strahlteilereinrichtung (5) zur Umlenkung eines ersten Teilstrahlenganges (17a) eines in Richtung der optischen Achse (2a) verlaufenden Strahlengangs (17) in eine erste Mikroskopebene I, welche bezüglich der optischen Achse (2a) des Hauptobjektivs (2) unter einem Winkel, insbesondere senkrecht, verläuft, und zur Transmission eines zweiten Teilstrahlenganges (17b) des Strahlenganges (17) in Richtung der optischen Achse (2a) des Hauptobjektivs (2),
und mit
Umlenkeinrichtungen (6a, 6b) zur Umlenkung des ersten Teilstrahlenganges (17a) aus der ersten Mikroskopebene I in eine zweite Mikroskopebene II, welche im wesentlichen parallel zu der ersten Mikroskopebene I verläuft, und einer Umlenkeinrichtung (6c) zur Umlenkung des von der Strahlenteilereinrichtung (5) transmittierten zweiten Teilstrahlenganges (17b) in eine dritte Mikroskopebene III, welche im wesentlichen parallel zu den ersten und zweiten Mikroskopebenen I, II oberhalb von diesen verläuft.

2. Mikroskop nach Anspruch 1, **dadurch gekennzeichnet, daß** die Strahlenteilereinrichtung (5) als geometrischer Strahlenteiler ausgebildet ist.

3. Mikroskop nach Anspruch 2, **dadurch gekennzeichnet, daß** die Strahlenteilereinrichtung (5) wenigstens einen reflektierenden Bereich (42a, 42b), und wenigstens einen transmittierenden Bereich (43a, 43b) aufweist.

4. Mikroskop nach Anspruch 1, **dadurch gekennzeichnet, daß** die Strahlenteilereinrichtung (5) als physikalischer Strahlenteiler ausgebildet ist.

5. Mikroskop nach einem der vorstehenden Ansprüche, **dadurch gekennzeichnet, daß** die Mikroskopebenen I, II, III im wesentlichen horizontal ausgerichtet sind.

6. Mikroskop nach einem der vorstehenden Ansprüche, **dadurch gekennzeichnet, daß** das Vergrößerungssystem (12, 13) ein in der ersten oder zweiten Mikroskopebene I, II vorgesehenes erstes Zoom-System (12) für den ersten Beobachter, und ein in der dritten Mikroskopebene III vorgesehenes zweites Zoom-System (13) für den zweiten Beobachter aufweist.

7. Mikroskop nach Anspruch 6, **dadurch gekennzeichnet, daß** das erste und das zweite Zoom-System (12, 13) jeweils mindestens zwei Vergrößerungs- bzw. Beobachtungskanäle aufweisen.

8. Mikroskop nach einem der vorstehenden Ansprüche, **dadurch gekennzeichnet, daß** die Umlenkeinrichtung (6c) um die optische Achse (2a) drehbar ausgebildet ist.

9. Mikroskop nach einem der vorstehenden Ansprüche, **dadurch gekennzeichnet, daß** sich der erste Teilstrahlengang (17a) und der zweite Teilstrahlengang (17b) in einem Bereich (20) des Schnittpunktes der optischen Achse (2a) des Hauptobjektivs und der zweiten Mikroskopebene II kreuzen.

10. Mikroskop nach einem der vorstehenden Ansprüche, **gekennzeichnet durch** wahlweise einsetzbare und/oder verschwenkbare Umlenkelemente (14a, 14b) mittels derer der erste Teilstrahlengang (17a) von der zweiten Mikroskopebene II in die erste Mikroskopebene I umlenkbar bzw. um die jeweiligen optischen Achsen (2c, 2e) in der ersten oder zweiten Mikroskopebene I, II drehbar ist.

11. Mikroskop nach einem der vorstehenden Ansprüche, **gekennzeichnet durch** eine zwischen dem Hauptobjektiv (2) und der Strahlenteilereinrichtung (5) vorgesehene Dateneinspiegelungseinrichtung (21).

12. Mikroskop nach einem der vorstehenden Ansprüche, **gekennzeichnet durch** optische Zusatzkomponenten und/oder Zwischenabbildungssysteme (11, 15) welche entlang der optischen Achse (2b) und/oder zwischen den Umlenkelementen (6a, 6b) und/oder entlang der optischen Achse (2c) angeordnet sind.

13. Mikroskop nach einem der vorstehenden Ansprüche, **gekennzeichnet durch** eine Positionierung einer Beleuchtungseinrichtung (4) beobachterseitig bezüglich der Umlenkeinrichtung (5), insbesondere im Bereich der optischen Achse (2a) oder (2b).

14. Mikroskop nach einem der vorstehenden Ansprüche 6 bis 13, **gekennzeichnet durch** eine elektrische und/oder mechanische Kopplung der Zoom-Systeme (12) und (13).

## Claims

1. Microscope, particularly a stereomicroscope, for simultaneous observation by a first and a second observer, comprising a microscope housing (101) having a common main objective (2) for the first and the second observer defining an optical axis (2a, 17), the objective (2) being arranged in a lower region of the microscope housing (101), a magnification system mounted after the main objective in the microscope housing (101), and a beam splitter device (5) mounted within the microscope housing (101) between the main objective (2) and the magnification system for deflecting a first partial optical beam path (17a) of an optical beam path (17) proceeding in the direction of optical axis (2a) into a first plane I of the microscope, which extends at an angle, particularly perpendicularly, with respect to the optical axis (2a) of the main objective (2), and for transmitting a second partial optical beam path (17b) of the optical beam path (17) in the direction of the optical axis (2a) of the main objective (2), and comprising deflector devices (6a, 6b) for deflecting the first partial optical beam path (17a) out of the first plane I of the microscope into a second plane II of the microscope which extends substantially parallel to the first plane I of the microscope, and a deflector device (6c) for deflecting the second partial optical beam path (17b) transmitted by the beam splitter device (5) into a third plane III of the microscope, which extends substantially parallel to the first and second planes I, II of the microscope and above these planes.

2. Microscope according to claim 1, **characterised in that** the beam splitter device (5) is provided as a geometric beam splitter.

3. Microscope according to claim 2, **characterised in that** the beam splitter device (5) has at least one reflective area (42a, 42b) and at least one transmitting area (43a, 43b).

4. Microscope according to claim 1, **characterised in that** the beam splitter device (5) is provided as a physical beam splitter.

5. Microscope according to one of the preceding claims, **characterised in that** the planes I, II, III of the microscope are aligned substantially horizontally.

6. Microscope according to one of the preceding claims, **characterised in that** the magnification system (12, 13) comprises a first zoom system (12) for the first observer, provided in the first or second plane I, II of the microscope, and a second zoom system (13) for the second observer, provided in the third plane III of the microscope.

7. Microscope according to claim 6, **characterised in that** the first and second zoom system (12, 13) each comprise at least two magnification or observation channels.

8. Microscope according to one of the preceding claims, **characterised in that** the deflecting device (6c) is constructed to be pivotable about the optical axis (2a).

9. Microscope according to one of the preceding claims, **characterised in that** the first partial optical beam path (17a) and the second partial optical beam path (17b) intersect in a region (20) of the point of intersection of the optical axis (2a) of the main objective and the second plane II of the microscope.

10. Microscope according to one of the preceding claims, **characterised by** deflector elements (14a, 14b) which can be selectively used and/or pivoted, by means of which the first partial optical beam path (17a) can be deflected from the second plane II of the microscope into the first plane I of the microscope or can be rotated about the respective optical axes (2c, 2e) in the first or second plane I, II of the microscope.

11. Microscope according to one of the preceding claims, **characterised by** a data projection device (21) provided between the main objective (2) and the beam splitter device (5).

12. Microscope according to one of the preceding claims, **characterised by** optical accessories and/or intermediate imaging systems (11, 15) which are arranged along the optical axis (2b) and/or between the deflector elements (6a, 6b) and/or along the optical axis (2c).

13. Microscope according to one of the preceding claims, **characterised by** a positioning of an illuminating device (4) on the observer's side with respect to the deflecting device (5), particularly in the region of the optical axis (2a) or (2b).

14. Microscope according to one of the preceding claims 6 to 13, **characterised by** an electrical and/or mechanical coupling of the zoom systems (12) and (13).

## Revendications

1. Microscope, en particulier stéréomicroscope, pour l'observation simultanée par un premier et un par second observateur, comportant un boîtier de microscope (101), comportant un objectif principal (2) commun définissant un axe optique (2a, 17) et destiné à un premier et à un second observateur et agencé dans la zone inférieure du boîtier de microscope (101), comportant un système d'agrandissement agencé en aval de l'objectif principal dans le boîtier de microscope, et un dispositif subdiviseur de rayons (5) agencé à l'intérieur du boîtier de microscope (101) entre l'objectif principal (2) et le système d'agrandissement et destiné à défléchir une première trajectoire partielle de rayons (17a) d'une trajectoire de rayons (17), s'étendant en direction de l'axe optique (2a), vers un premier plan de microscope I qui s'étend sous un angle, en particulier perpendiculairement à l'axe optique (2a) de l'objectif principal (2), et destiné à transmettre une seconde trajectoire partielle de rayons (17b) de la trajectoire de rayons (17) en direction de l'axe optique (2a) de l'objectif principal (2), et comportant des dispositifs de déflexion (6a, 6b) pour défléchir la première trajectoire partielle de rayons (17a) depuis le premier plan de microscope I vers un second plan de microscope II qui s'étend sensiblement parallèlement au premier plan de microscope I, et un dispositif de déflexion (6c) pour défléchir la seconde trajectoire partielle de rayons (17b) transmise par le dispositif subdiviseur de rayons (5) vers un troisième plan de microscope III qui s'étend sensiblement parallèlement au premier et au second plan de microscope I, II au-dessus de ceux-ci.

2. Microscope selon la revendication 1, **caractérisé en ce que** le dispositif subdiviseur de rayons (5) est réalisé sous la forme d'un subdiviseur de rayon géométrique.

3. Microscope selon la revendication 2, **caractérisé en ce que** le dispositif subdiviseur de rayon (5) comprend au moins une zone de réflexion (42a, 42b) et au moins une zone de transmission (43a, 43b).

4. Microscope selon la revendication 1, **caractérisé en ce que** le dispositif subdiviseur de rayon (5) est réalisé sous la forme d'un subdiviseur de rayon physique.

5. Microscope selon l'une des revendications précédentes, **caractérisé en ce que** les plans de microscope I, II, III sont orientés sensiblement horizontalement.

6. Microscope selon l'une des revendications précédentes, **caractérisé en ce que** le système d'agrandissement (12, 13) comprend un premier système de zoom (12) prévu dans le premier ou dans le second plan de microscope I, II et destiné au premier observateur, et un second système de zoom (13) prévu dans le troisième plan de microscope III et destiné au second observateur.

7. Microscope selon la revendication 6, **caractérisé en ce que** le premier et le second système de zoom (12, 13) comprennent chacun au moins deux canaux d'agrandissement ou d'observation.

8. Microscope selon l'une des revendications précédentes, **caractérisé en ce que** le dispositif de déflexion (6c) est réalisé avec faculté de rotation autour de l'axe optique (2a).

9. Microscope selon l'une des revendications précédentes, **caractérisé en ce que** la première trajectoire partielle de rayons (17a) et la seconde trajectoire partielle de rayons (17b) se croisent dans une zone (20) du point d'intersection de l'axe optique (2a) de l'objectif principal et du second plan de microscope II.

10. Microscope selon l'une des revendications précédentes, **caractérisé par** des éléments de déflexion (14a, 14b) susceptibles d'être utilisés et/ou pivotés sélectivement, au moyen desquels la première trajectoire partielle de rayons (17a) est susceptible d'être défléchie depuis le second plan de microscope II vers le premier plan de microscope I ou d'être tournée autour les axes optiques respectifs (2c, 2e) dans le premier ou dans le second plan de microscope I, II.

11. Microscope selon l'une des revendications précédentes, **caractérisé par** un dispositif d'injection de données par réflexion (21) prévu entre l'objectif principal (2) et le dispositif subdiviseur de rayon (5).

12. Microscope selon l'une des revendications précédentes, **caractérisé par** des composants optiques supplémentaires et/ou par des systèmes d'imagerie intermédiaires (11, 15) qui sont agencés le long de l'axe optique (2b) et/ou entre les éléments de déflexion (6a, 6b) et/ou le long de l'axe optique (2c).

13. Microscope selon l'une des revendications précédentes, **caractérisé par** un positionnement d'un dispositif d'éclairage (4) du côté observateur par rapport au dispositif de déflexion (5), en particulier dans la zone de l'axe optique (2a) ou (2b).

14. Microscope selon l'une des revendications 6 à 13, **caractérisé par** un couplage électrique et/ou mécanique des systèmes de zoom (12) et (13).
